# EUROPEAN PATENT SPECIFICATION

(11) **EP 2 950 369 B1**
(45) Date of publication and mention of the grant of the patent: **17.01.2018**
(21) Application number: 15169322.3
(22) Date of filing: 27.05.2015
(51) Int. Cl.: H01M 2/16, H01M 4/525, H01M 4/587, H01M 10/0525, H01M 4/02, H01M 4/131, H01M 4/133, H01M 4/62

(54) **ENERGY STORAGE DEVICE**
ENERGIESPEICHERVORRICHTUNG
DISPOSITIF DE STOCKAGE D'ÉNERGIE

(30) Priority: 28.05.2014 JP 2014110545; 10.04.2015 JP 2015081212
(43) Date of publication of application: 02.12.2015
(73) Proprietor: GS Yuasa International Ltd., Kisshoin, Minami-ku, Kyoto-shi, Kyoto 601-8520 (JP)
(72) Inventor: Miyazaki, Akihiko, Kyoto, 601-8520 (JP); Mori, Sumio, Kyoto, 601-8520 (JP); Kako, Tomonori, Kyoto, 601-8520 (JP); Nakai, Kenta, Kyoto, 601-8520 (JP)
(74) Representative: Isarpatent

(56) References cited:
- EP-A1- 2 685 525
- EP-A1- 2 816 645
- JP-A- 2010 098 020
- JP-A- 2013 222 581
- US-A1- 2014 091 760

## Description

### FIELD

The present invention relates to an energy storage device.

### BACKGROUND

In order to cope with global environmental problems, shifting from a gasoline automobile to an electric vehicle has been an important issue. Thus, the development of an electric vehicle in which an energy storage device such as a lithium ion secondary battery is used as a power source has been advanced. In such an energy storage device, it is important to attain the enhancement in charge-discharge cycle characteristics such as the discharge capacity retention ratio. On that account, there has hitherto been proposed an energy storage device attempting to attain the enhancement in charge-discharge cycle characteristics by providing a porous insulating layer on the interface between a separator or a lithium ion conductive layer and an electrode plate (see, for example, JP 2007-87690 A or JP 2013-222581 A).

### SUMMARY

In the above-mentioned conventional energy storage device, at the charge-discharge in a high rate cycle, since the variation in depth of charge associated with the variation of the ion path resistance is generated other than the shortage in liquid quantity, particularly in a high rate cycle at high temperature, the deterioration in charge-discharge cycle characteristics such as the discharge capacity retention ratio is relatively large. The present invention has been made in view of solving the above-mentioned problems.

An object of the present invention is to provide an energy storage device excellent in high rate cycle endurance at high temperature.

An energy storage device according to an aspect of the present invention includes: a positive electrode, a negative electrode, a separator disposed between the positive electrode and the negative electrode, a nonaqueous electrolyte, and an insulating layer disposed between the positive electrode and the separator, wherein the positive electrode contains a compound represented by LiₐNi_{b}Co_{c}M_{d}WₓNb_{y}Zr_{z}O₂ (provided that a, b, c, d, x, y and z satisfy the equations of 0 ≤ a ≤ 1.2, 0 ≤ b ≤ 1, 0.1 ≤ c ≤ 0.4, 0 ≤ d ≤ 0.5, 0 ≤ x ≤ 0.1, 0 ≤ y ≤ 0.1, 0 ≤ z ≤ 0.1 and b + c + d = 1, and M denotes at least one kind of element selected from the group consisting of Mn, Ti, Cr, Fe, Co, Cu, Zn, Al, Ge, Sn and Mg) as a positive active material and the negative electrode contains hardly graphitizable carbon with a D50 particle diameter greater than or equal to 1.0 µm and less than or equal to 6.0 µm as a negative active material, wherein the proportion of a D90 particle diameter of the negative active material to the thickness of the negative composite layer disposed at one side of the negative substrate layer is greater than or equal to 0.07 and less than or equal to 0.7.

### BRIEF DESCRIPTION OF DRAWINGS

FIG. 1 is an external perspective view of an energy storage device according to an embodiment of the present invention.
FIG. 2 is a perspective view showing a constitution of an electrode body according to an embodiment of the present invention.
FIG. 3 is a sectional view showing a constitution of an electrode body according to an embodiment of the present invention.
FIG. 4 is a graphical representation showing the discharge capacity retention ratio in the case where the Co composition ratio in the positive electrode is changed.
FIG. 5 is a graphical representation showing the discharge capacity retention ratio in the case where the D50 particle diameter of the hardly graphitizable carbon in the negative active material is changed.
FIG. 6 is a graphical representation showing the discharge capacity retention ratio in the case where the D90 particle diameter of the hardly graphitazable carbon in the negative active material /thickness of negative composite layer on one side is changed.
FIG. 7 is a ternary diagram of Ni, Co and Mn contained in a positive active material in accordance with examples and comparative examples.

### DESCRIPTION OF EMBODIMENTS

According to an aspect of the present invention, in order to achieve the above-mentioned object, an energy storage device including: a positive electrode, a negative electrode, a separator disposed between the positive electrode and the negative electrode, a nonaqueous electrolyte, and an insulating layer disposed between the positive electrode and the separator, wherein the positive electrode contains a compound represented by LiₐNi_{b}Co_{c}M_{d}WₓNb_{y}Zr_{z}O₂ (provided that a, b, c, d, x, y and z satisfy the equations of 0 ≤ a ≤ 1.2, 0 ≤ b ≤ 1, 0.1 ≤ c ≤ 0.4, 0 ≤ d ≤ 0.5, 0 ≤ x ≤ 0.1, 0 ≤ y ≤ 0.1, 0 ≤ z ≤ 0.1 and b + c + d = 1, and M denotes at least one kind of element selected from the group consisting of Mn, Ti, Cr, Fe, Co, Cu, Zn, Al, Ge, Sn and Mg) as a positive active material and the negative electrode contains hardly graphitizable carbon with a D50 particle diameter greater than or equal to 1.0 µm and less than or equal to 6.0 µm as a negative active material.

With this configuration, since an insulating layer is disposed between the positive electrode and the separator, the liquid holding characteristics are enhanced, and moreover, the charge-discharge is suppressed from becoming uneven. Thus, the charge-discharge cycle characteristics such as the discharge capacity retention ratio are enhanced. Moreover, since hardly graphitizable carbon with a specific particle diameter is used in the negative electrode, it is possible to make the ion path resistance uniform during the charge-discharge, and furthermore, it is possible to suppress the variation in depth of charge-discharge from being generated in the negative electrode since the SOC (State Of Charge)-electric potential is inclined at a certain level of gradient. Since the positive electrode composed of a Li-Ni-Co-M based composite oxide has a Co ratio greater than or equal to 0.1 and less than or equal to 0.4, the oxidative decomposition of the liquid is suppressed on the positive electrode. Thus, since satisfactory cycle characteristics can be maintained even in a high rate cycle at high temperature in which the charge-discharge is performed, for example, at a current of 10 C (A), it is possible to enhance the high rate cycle endurance at high temperature. In another aspect of the energy storage device, the negative electrode includes a negative substrate layer and a negative composite layer containing the negative active material on the negative substrate layer, and the proportion of a D90 particle diameter of the negative active material to the thickness of the negative composite layer disposed at one side of the negative substrate layer may be greater than or equal to 0.07 and less than or equal to 0.7.

As a result of extensive researches and experiments, furthermore, the present inventors have found that the lowering in discharge capacity retention ratio can be suppressed or the enhancement in discharge capacity retention ratio can be attained, in the case where the proportion of a D90 particle diameter of the negative active material to the thickness of the negative composite layer is greater than or equal to 0.07 and less than or equal to 0.7. Thus, furthermore, in the above-mentioned energy storage device, by allowing the proportion to be greater than or equal to 0.07 and less than or equal to 0.7, it is possible to attain the enhancement in high rate cycle endurance at high temperature.

In still another aspect of the energy storage device, the positive electrode may include a positive substrate layer and a positive composite layer containing the positive active material on the positive substrate layer, and the insulating layer may be bonded to the separator and is not bonded to the positive composite layer.

As a result of extensive researches and experiments, the present inventors have found that the insulation breakdown of an insulating layer can be prevented, and the lowering in charge-discharge cycle characteristics can be suppressed or the enhancement in charge-discharge cycle characteristics can be attained, in the case where the insulating layer is bonded to the separator and is separate from the positive composite layer. Thus, in the above-mentioned energy storage device, by allowing the insulating layer to be bonded to the separator and is separate from the positive composite layer, it is possible to attain the enhancement in high rate cycle endurance at high temperature.

In still another aspect of the energy storage device, the negative electrode may include a negative substrate layer and a negative composite layer containing the negative active material on the negative substrate layer, and the proportion of a D90 particle diameter of the negative active material to the thickness of the negative composite layer disposed at one side of the negative substrate layer is greater than or equal to 0.12 and less than or equal to 0.44.

As a result of extensive researches and experiments, furthermore, the present inventors have found that the lowering in discharge capacity retention ratio can be suppressed or the enhancement in discharge capacity retention ratio can be attained, and highly enhanced output can be attained, in the case where the proportion of a D90 particle diameter of the negative active material to the thickness of the negative composite layer is greater than or equal to 0.12 and less than or equal to 0.44. Thus, furthermore, in the above-mentioned energy storage device, by allowing the proportion to be greater than or equal to 0.12 and less than or equal to 0.44, it is possible to attain the enhancement in high rate cycle endurance at high temperature and to attain the highly enhanced output.

In still another aspect of the energy storage device, the insulating layer may be constituted of a resin containing inorganic particles.

With this configuration, since the insulating layer is constituted of a resin which contains inorganic particles, is not oxidized and does not become conductive, it is possible to avoid the partial breakdown of the insulation from being generated during the charge-discharge cycle due to the variation in coating thickness caused by the unevenness on the positive active material layer surface and the expansion or contraction of the positive electrode during the charge-discharge. Thus, the oxidation of a separator is suppressed and the charge-discharge cycle characteristics are enhanced.

By allowing an energy storage to be provided with an insulating layer disposed between a positive electrode and a separator, the positive electrode with a Co composition ratio greater than or equal to 0.1 and less than or equal to 0.4 in an Li-Ni-Co-M based composite oxide, and a negative electrode containing hardly graphitizable carbon with a D50 particle diameter greater than or equal to 2.0 µm and less than or equal to 6.0 µm, it is possible to enhance the high rate cycle endurance.

Hereinafter, the energy storage device according to an embodiment of the present invention will be described with reference to the drawings. Any of the embodiments described below is one showing a preferred specific example of the present invention. The numerical value, the form, the material, the constituent element, the arrangement position of the constituent element, the connection configuration, and the like shown in the following embodiments are merely illustrative, and the embodiments should not be construed to limit the scope of the present invention. Moreover, among the constituent elements in the following embodiments, a constituent element which is not described in an independent claim having the broadest concept of an aspect of the present invention will be illustrated as any constituent element constituting a more preferred embodiment.

First, the configuration of an energy storage device 10 will be described.

### [1. Entire configuration]

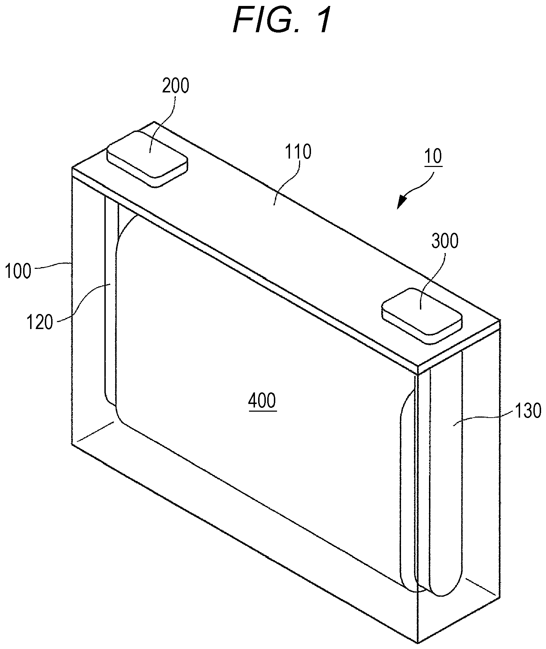

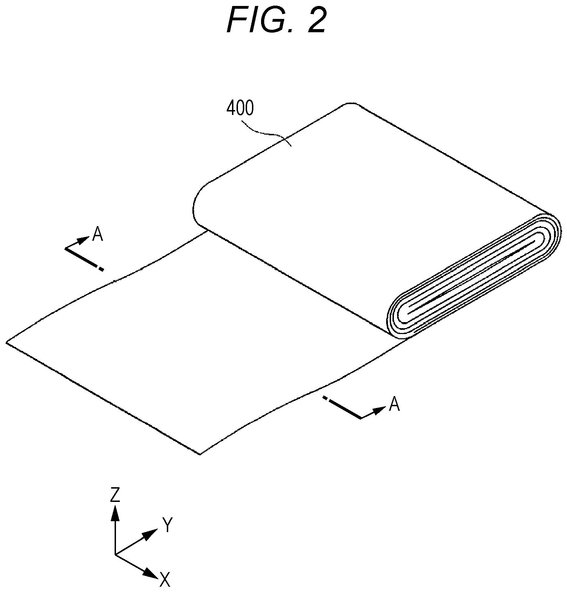

FIG. 1 is an external perspective view of an energy storage device 10 according to an embodiment of the present invention, in which the inside of a container is visible. FIG. 2 is a perspective view showing a constitution of an electrode body 400 according to an embodiment of the present invention. The FIG. 2 is a figure making the electrode body 400 in a wound state shown in Fig. 1 into one in a partially developed state.

The energy storage device 10 is a secondary battery which is capable of being charged with electricity, and moreover, discharging electricity. More specifically, the energy storage device 10 is a nonaqueous electrolyte secondary battery such as a lithium ion secondary battery. For example, the energy storage device 10 is a secondary battery used for a hybrid electric vehicle (Hybrid Electric Vehicle, HEV), a plug-in hybrid electric vehicle (PHEV), an electric vehicle (EV), and the like. The energy storage device 10 is not limited to the nonaqueous electrolyte secondary battery, may be a secondary battery other than the nonaqueous electrolyte secondary battery, and may be a capacitor.

As shown in these figures, the energy storage device 10 is provided with a container 100, a positive electrode terminal 200 and a negative electrode terminal 300, and the container 100 is provided with a lid plate 110 constituting the upper wall. Moreover, each of the electrode body 400, a positive current collector 120 and a negative current collector 130 is disposed in the container 100. Although a liquid such as an electrolyte solution (a nonaqueous electrolyte) is enclosed in the inside of the container 100 of the energy storage device 10, the illustration of the liquid will be omitted.

The container 100 is constituted of a bottomed rectangular cylindrical housing body made of a metal and a lid plate 110 made of a metal which closes the opening of the housing body. Moreover, the electrode body 400 and the like are housed in the container 100, after which the inside of the container 100 can be airtightly sealed by allowing the lid plate 110 and the housing body to be welded to each other, and the like.

The electrode body 400 is provided with a positive electrode, a negative electrode and a separator, and is capable of accumulating electricity. Specifically, one prepared by disposing a negative electrode, a positive electrode and a separator in a laminated state so as to allow the separator to be sandwiched between the negative electrode and the positive electrode is wound so as to allow the sectional shape of the whole body to be an elongated circular shape to form the electrode body 400. In the figure, although the sectional shape of the electrode body 400 is an elongated circular shape, the sectional shape thereof may be a circular shape or an elliptical shape. Moreover, not limited to the wound type one, the shape of the electrode body 400 may be a shape allowing flat electrode plates to be stacked (stacked type one). The detailed constitution of the electrode body 400 will be described later.

The positive electrode terminal 200 is an electrode terminal electrically connected to the positive electrode of the electrode body 400, and the negative electrode terminal 300 is an electrode terminal electrically connected to the negative electrode of the electrode body 400. That is, the positive electrode terminal 200 and the negative electrode terminal 300 are metal-made electrode terminals for leading out electricity accumulated in the electrode body 400 to the outer space of the energy storage device 10, and moreover, for allowing electricity to be introduced into the inner space of the energy storage device 10 so that the electrode body 400 accumulates electricity.

The positive current collector 120 is a member which is disposed between the positive electrode of the electrode body 400 and a side wall of the container 100, is electrically connected to the positive electrode terminal 200 and the positive electrode of the electrode body 400, and is imparted with conductivity and rigidity. In this connection, as in the case of a positive substrate layer of the electrode body 400 described later, the positive current collector 120 is formed by aluminum or an aluminum alloy.

Moreover, the negative current collector 130 is a member which is disposed between the negative electrode of the electrode body 400 and a side wall of the container 100, is electrically connected to the negative electrode terminal 300 and the negative electrode of the electrode body 400, and is imparted with conductivity and rigidity. In this connection, as in the case of a negative substrate layer of the electrode body 400 described later, the negative current collector 130 is formed by copper or a copper alloy.

Moreover, the nonaqueous electrolyte (the electrolyte solution) enclosed in the inside of the container 100 may be selected from various types thereof. In the energy storage device 10, the following organic solvents and electrolyte salts are combined to be used as the nonaqueous electrolyte.

The organic solvent for the nonaqueous electrolyte may include a kind of cyclic carbonate such as propylene carbonate, ethylene carbonate, butylene carbonate, chloroethylene carbonate and vinylene carbonate; a kind of cyclic ester such as γ-butyrolactone and γ-valerolactone; a kind of chain carbonate such as dimethyl carbonate, diethyl carbonate and ethyl methyl carbonate; a kind of chain ester such as methyl formate, methyl acetate and methyl butyrate; tetrahydrofuran or a derivative thereof; a kind of ether such as 1,3-dioxane, 1,4-dioxane, 1,2-dimethoxyethane, 1,4-dibutoxyethane and methyldiglyme; a kind of nitrile such as acetonitrile and benzonitrile; dioxolane or a derivative thereof; one kind of ethylene sulfide, sulfolane, sultone or a derivative thereof, and the like or a mixture of two or more kinds thereof, and the like., However, the organic solvent is not limited thereto. In this connection, a known additive reagent may be added to the nonaqueous electrolyte.

Moreover, examples of the electrolyte salt contained in the nonaqueous electrolyte include an inorganic ionic salt containing one kind of lithium (Li), sodium (Na) or potassium (K) such as LiClO₄, LiBF₄, LiAsF₆, LiPF₆, LiSCN, LiBr, LiI, Li₂SO₄, Li₂B₁₀Cl₁₀, NaClO₄, NaI, NaSCN, NaBr, KClO₄ and KSCN, an organic ionic salt such as LiCF₃SO₃, LiN(CFaSO₂)₂, LiN(C₂F₅SO₂)₂, LiN(CF₃SO₂)(C₄F₉SO₂), LiC(CF₃SO₂)₃, LiC(C₂F₅SO₂)₃, (CH₃)₄NBF₄, (CH₃)₄NBr, (C₂H₅)₄NClO₄, (C₂H₅)₄NI, (C₃H₇)₄NBr, (n-C₄H₉)₄NClO₄, (n-C₄H₉)₄NI, (C₂H₅)₄N-maleate, (C₂H₅)₄N-benzoate, (C₂H₅)₄N-phthalate, lithium stearylsulfonate, lithium octylsulfonate and lithium dodecylbenzenesulfonate, and the like. These ionic compounds can be used alone or two or more kinds thereof can be mixedly used.

Next, the detailed constitution of the electrode body 400 will be described.

### [2. Constitution of electrode body]

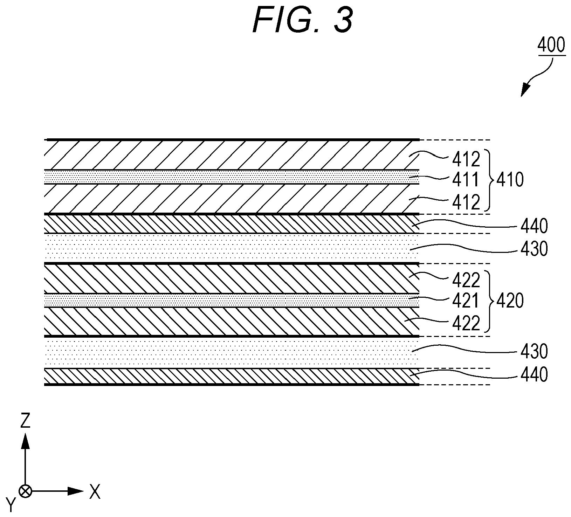

FIG. 3 is a sectional view showing a constitution of an electrode body 400 according to an embodiment of the present invention. Specifically, the FIG. 3 is a figure showing a section taken along the line A-A in a developed part shown in FIG. 2 of the electrode body 400 which has been in a wound state.

As shown in the figure, a positive electrode 410, a negative electrode 420, two separators 430 and two inorganic coating layers 440 are laminated to form the electrode body 400. Specifically, one separator 430 is disposed between the positive electrode 410 and the negative electrode 420, and one inorganic coating layer 440 is disposed between the positive electrode 410 and the separator 430.

### [2.1 Constitution of positive electrode]

First, the positive electrode 410 will be described. The positive electrode 410 has a positive substrate layer 411 and a positive composite layer 412.

The positive substrate layer 411 is a long-length belt-shaped sheet of conductive current collecting foil composed of aluminum or an aluminum alloy. As the current collecting foil, a known material such as nickel, iron, stainless steel, titanium, furnace carbon, a conductive polymer, conductive glass, an Al-Cd alloy, and the like may also be appropriately used.

The positive composite layers 412 are active material layers formed on the surface of the positive substrate layer 411. That is, the positive composite layers 412 are formed on both faces in the Z-axis positive direction and negative direction of the positive substrate layer 411, respectively. The positive composite layer 412 contains a positive active material, a conductive assistant and a binder.

The positive active material used for the positive composite layer 412 is a positive active material capable of occluding and releasing lithium ions, and contains a compound represented by LiₐNi_{b}Co_{c}M_{d}WₓNb_{y}Zr_{z}O₂ (provided that, in the formula, a, b, c, d, x, y and z satisfy the equations of 0 ≤ a ≤ 1.2, 0 ≤ b ≤ 1, 0.1 ≤ c ≤ 0.4, 0 ≤ d ≤ 0.5, 0 ≤ x ≤ 0.1, 0 ≤ y ≤ 0.1, 0 ≤ z ≤ 0.1 and b + c + d = 1, and M denotes at least one kind of element selected from the group consisting of Mn, Ti, Cr, Fe, Co, Cu, Zn, Al, Ge, Sn and Mg). It is preferred that the M be Mn (manganese). Moreover, it is preferred that the D50 particle diameter of the positive active material be 2 µm to 8 µm. The D50 particle diameter refers to a particle diameter obtained by measuring the volume distribution of particles to be measured by a laser diffraction scattering method and being read at a point corresponding to 50% volume (in the integrated distribution) of the quantity of particles with a particle diameter less than or equal to a specific particle diameter.

As described later, in the case of using hardly graphitizable carbon (HC: hard carbon) with a specific particle diameter as the negative active material, when the charge-discharge is in progress, the negative electrode potential is shifted to the noble potential side as a surface film attributed to the decomposition of the electrolyte solution grows on the negative electrode, and simultaneously, the positive electrode potential is shifted to the noble potential side. By considering the influence thereof, attention must be paid so as not to allow the liquid to easily suffer from oxidative decomposition on the positive electrode during the charge-discharge cycle. In contrast, by allowing the positive active material to have a Co composition ratio greater than or equal to 0.1 and less than or equal to 0.4, the above-mentioned oxidative decomposition is suppressed, and even after a long-period charge-discharge cycle, it is possible to suppress the deterioration in capacity retention ratio caused by oxidative decomposition.

The kind of the conductive assistant used for the positive composite layer 412 is not particularly limited, and the conductive assistant may be made of a metal and may be made of a nonmetal. As a metal-made conductive assistant, a material constituted of a metal element such as copper and nickel can be used. Moreover, as a nonmetal-made conductive assistant, a carbon material such as graphite, carbon black, acetylene black and ketjen black can be used.

With regard to the binder used for the positive composite layer 412, the kind thereof is not particularly limited as long as the binder is stable against a solvent used during the production of an electrode or an electrolyte solution, and moreover, the binder is a material stable against an oxidation-reduction reaction during the charge-discharge. Examples of the binder include a thermoplastic resin such as polytetrafluoroethylene (PTFE), polyvinylidene fluoride (PVDF), polyethylene and polypropylene, and a polymer having a rubber elasticity such as an ethylene-propylene-diene terpolymer (EPDM), a sulfonated EPDM, styrene-butadiene rubber (SBR) and fluororubber, and one kind thereof or a mixture of two or more kinds thereof can be used.

The positive electrode 410 may include an undercoat layer interposed between the positive substrate layer 411 and the positive composite layer 412.

The undercoat layer is a thermosetting undercoat layer which is formed on the surface (in FIG. 3, on each of both faces in the Z-axis positive direction and negative direction) of the positive substrate layer 411 and is different from the positive composite layer 412 in kind of the resin or content of the composite. Moreover, the undercoat layer contains a binder (an organic binder) and a conductive assistant.

Examples of a resin for the material of the organic binder used for the undercoat layer include at least one kind selected from the group consisting of a chitin-chitosan derivative, a cellulose derivative, a fluorinated resin, synthetic rubber, a polyamide, a polyimide, a polyolefin and a polyacryl.

Specifically, examples of the chitin-chitosan derivative include at least one kind of hydroxyalkyl chitosan selected from the group consisting of hydroxyethyl chitosan, hydroxypropyl chitosan, hydroxybutyl chitosan, an alkylated chitosan, and the like. It is preferred from the viewpoint of endurance of the binder that the above-mentioned chitin-chitosan derivative have a cross linked structure formed by heating the mixture of the chitin-chitosan derivative and an organic acid such as salicylic acid, pyromellitic acid, citric acid and trimellitic acid or any other methods.

One example of the cellulose derivative includes CMC (carboxymethyl cellulose) and a salt thereof. Specifically, examples thereof include H-CMC, Na-CMC, NH₄-CMC, and the like.

Examples of the fluorinated resin include polyvinylidene fluoride, polytetrafluoroethylene, and the like. Examples of the synthetic rubber include styrene-butadiene rubber, acrylic rubber, nitrile rubber, and the like. Examples of the polyolefin include low density polyethylene, high density polyethylene, polypropylene, and the like. Examples of the polyacryl include ethylene glycol dimethacrylate, propylene glycol dimethacrylate, and the like.

It is preferred that the organic binder for the undercoat layer contain at least one kind selected from a chitosan derivative and a cellulose derivative. Moreover, it is preferred that the amount of an organic binder added be 20 to 80% by mass relative to the whole raw material for the undercoat layer, and it is further preferred that the amount of an organic binder added lie within the range of 50 to 75% by mass. By allowing an organic binder in such an amount to be added to the undercoat layer, the adhesive strength of the undercoat layer is heightened, the adhesive properties of the interface between the positive substrate layer 411 and the positive composite layer 412 are secured, and the electric conductivity can be maintained.

Moreover, as the conductive assistant used for the undercoat layer, particles having high electrical conductivity are used. Examples of the conductive assistant include a carbon-based material such as carbon black, acetylene black and ketjen black, at least one kind selected from the group consisting of metal fine particles made of iron, nickel, copper, aluminum and the like.

It is preferred that the amount of a conductive assistant added to the undercoat layer be 5 to 50% by mass relative to the whole raw material for the undercoat layer, and it is further preferred that the amount of a conductive assistant added lie within the range of 10 to 30% by mass. By allowing a conductive assistant in such an amount to be added to the undercoat layer, appropriate conductivity can be maintained.

### [2.2 Constitution of negative electrode]

Next, the negative electrode 420 will be described. The negative electrode 420 has a negative substrate layer 421 and a negative composite layer 422.

The negative substrate layer 421 is a long-length belt-shaped sheet of conductive current collecting foil composed of copper or a copper alloy. As the current collecting foil, a known material such as nickel, iron, stainless steel, titanium, furnace carbon, a conductive polymer, conductive glass, an Al-Cd alloy, and the like may also be appropriately used.

The negative composite layers 422 are active material layers formed on the surface (in FIG. 3, on both faces in the Z-axis positive direction and negative direction) of the negative substrate layer 421, and are disposed on both sides of the negative substrate layer 421 so as to sandwich the negative substrate layer 421. The negative composite layer 422 contains a negative active material, a conductive assistant and a binder.

Examples of the negative active material used for the negative composite layer 422 include hardly graphitizable carbon (HC: hard carbon) with a D50 particle diameter greater than or equal to 1.0 µm and less than or equal to 6.0 µm.

In this way, by allowing hardly graphitizable carbon with a specific particle diameter to be used as the negative active material, it is possible to make the ion path resistance uniform during the charge-discharge, and furthermore, it is possible to suppress the variation in depth of charge-discharge from being generated in the negative electrode since the SOC (State Of Charge)-electric potential is inclined at a certain level of gradient. Moreover, as described above, since the positive electrode composed of a Li-Ni-Co-M based composite oxide is allowed to have a Co composition ratio greater than or equal to 0.1 and less than or equal to 0.4, the oxidative decomposition of the liquid is suppressed on the positive electrode. Thus, since satisfactory charge-discharge cycle characteristics can be maintained even in a high rate cycle at high temperature in which the charge-discharge is performed, for example, at a current of 10 C (A), it is possible to enhance the high rate cycle endurance at high temperature.

Moreover, according to the invention the proportion of a D90 particle diameter of the negative active material to the thickness of the negative composite layer 422 disposed at one side of the negative substrate layer 421 (D90 particle diameter of the negative active material /Thickness of negative composite layer on one side) be greater than or equal to 0.07 and less than or equal to 0.7. With this setup, it is possible to suppress the lowering in discharge capacity retention ratio or to attain the enhancement in discharge capacity retention ratio. Thus, furthermore, in the energy storage device 10, it is possible to attain the enhancement in high rate cycle endurance at high temperature. The D90 particle diameter refers to a particle diameter obtained by measuring the volume distribution of particles to be measured by a laser diffraction scattering method and being read at a point corresponding to 90% volume (in the integrated distribution) of the quantity of particles with a particle diameter less than or equal to a specific particle diameter.

Moreover, it is preferred that the proportion of a D90 particle diameter of the negative active material to the thickness of the negative composite layer 422 disposed at one side of the negative substrate layer 421 (D90 particle diameter of the negative active material/Thickness of negative composite layer on one side) be greater than or equal to 0.12 and less than or equal to 0.44. With this setup, it is possible to suppress the lowering in discharge capacity retention ratio or to attain the enhancement in discharge capacity retention ratio, and to attain the highly enhanced output. Thus, furthermore, in the energy storage device 10, it is possible to attain the enhancement in high rate cycle endurance at high temperature and to attain the highly enhanced output.

The D90 particle diameter is used as the representative value of coarse particles contained in the active material. When the value of the D90 particle diameter of the negative active material/thickness of negative composite layer on one side is too large, the unevenness on the electrode surface may be affected by coarse particles, the heterogeneous reaction is promoted during the high rate charge-discharge, and the cycle characteristics are lowered. On the other hand, when the value of D90 particle diameter of the negative active material/thickness of negative composite layer on one side is too small (being extremely thickly applied), the output characteristics are adversely affected.

Since the conductive assistant used for the negative composite layer 422 and the conductive assistant used for the positive composite layer 412 are the same as each other, the detailed description will be omitted.

With regard to the binder used for the negative composite layer 422, the kind thereof is not particularly limited as long as the binder is stable against a solvent used during the production of an electrode or an electrolyte solution, and moreover, the binder is a material stable against an oxidation-reduction reaction during the charge-discharge. Examples thereof include a thermoplastic resin such as polytetrafluoroethylene (PTFE), polyvinylidene fluoride (PVDF), polyethylene and polypropylene, and a polymer having a rubber elasticity such as an ethylene-propylene-diene terpolymer (EPDM), a sulfonated EPDM, styrene-butadiene rubber (SBR) and fluororubber, and one kind thereof or a mixture of two or more kinds thereof can be used.

In the present embodiment, although the positive composite layers 412 are formed on both faces of the positive substrate layer 411 and the negative composite layers 422 are formed on both faces of the negative substrate layer 421, not limited thereto, a positive composite layer 412 may be formed on one face of the positive substrate layer 411 and a negative composite layer 422 may be formed on one face of the negative substrate layer 421.

### [2.3 Constitution of separator]

Next, the separator 430 will be described. The separator 430 is a long-length belt-shaped separator disposed between the positive electrode 410 and the negative electrode 420, and is wound together with the positive electrode 410 and the negative electrode 420 in the long-side direction (the Y-axis direction), and plural layers thereof are layered to form an electrode body 400.

For the separator 430, resin porous membranes in general can be used. For example, as the separator 430, a resin porous membrane composed of woven fabric or nonwoven fabric of a polymer, natural fibers, hydrocarbon fibers, glass fibers or ceramic fibers is used. Moreover, the resin porous membrane is preferably composed of woven fabric or polymer nonwoven fabric. In particular, it is preferred that the resin porous membrane be composed of polymer woven fabric or fleece, or the resin porous membrane be composed only of such woven fabric or fleece. As the polymer fiber, the resin porous membrane preferably has a non-electroconductive fiber made of a polymer selected from polyacrylonitrile (PAN), a polyamide (PA), polyester, for example, polyethylene terephthalate (PET) and/or a polyolefin (PO), for example, polypropylene (PP) or polyethylene (PE) or a mixture of these polyolefins, and a composite membrane. Moreover, the resin porous membrane may be a polyolefin microporous membrane, nonwoven fabric, paper, or the like, and is preferably a polyolefin microporous membrane.

In view of an influence on the battery characteristics, it is preferred that the thickness of the separator 430 be 5 to 30 µm or so. Moreover, it is preferred that the separator 430 have an air permeability of 30 to 150 seconds/100cc.

### [2.4 Constitution of insulating layer]

Next, the inorganic coating layer 440 will be described. The inorganic coating layer 440 is an insulating layer disposed between the positive electrode 410 and the separator 430.

Specifically, it is preferred that the inorganic coating layer 440 be a resin-based insulating coating layer containing inorganic particles. When the surface potential of the positive electrode becomes high, there is a case where the insulation properties are lowered due to oxidation of the separator. Due to lowering in insulation properties of the separator, the discharge capacity decreases. In the present embodiment, as the inorganic coating layer 440, a resin which is not oxidized and does not become conductive is used. With this setup, the oxidation of the separator 430 is suppressed and the charge-discharge cycle characteristics are enhanced.

As the inorganic particles for the inorganic coating layer 440, either of a synthetic product and a natural product can be used without particular restriction. For example, the inorganic particles are composed only of one inorganic substance among the following or are composed of a mixture or a composite compound thereof. That is, examples of the inorganic particles include an oxide such as SiO₂, Al₂O₃, TiO₂, BaTiO₂, ZrO and an alumina-silica composite oxide; nitride fine particles such as aluminum nitride and silicon nitride; hardly soluble ionic crystal fine particles such as calcium fluoride, barium fluoride and barium sulfate; covalent bond crystal fine particles such as silicon and diamond; clay fine particles such as talc and montmorillonite; a substance derived from mineral resources such as boehmite, zeolite, apatite, kaolin, mullite, spinel, olivine, sericite, bentonite and mica or an artificial substance thereof; and the like. Moreover, fine particles prepared by subjecting the surface of conductive fine particles including oxide fine particles such as SnO₂ and tin-indium oxide (ITO); and carbonaceous fine particles such as carbon black and graphite to a surface treatment with a material having an electrically insulating nature (for example, a material constituting the above-mentioned electrically insulating inorganic particles), and allowing the fine particles to have an electrically insulating nature are also acceptable. In particular, as the inorganic particles, SiO₂, Al₂O₃ and an alumina-silica composite oxide are preferred.

It is preferred that the inorganic coating layer 440 be coated on the surface of the separator 430. That is, it is preferred that the inorganic coating layer 440 be bonded to the separator 430 and not be bonded to the positive composite layer 412. That is, it is preferred that the separator 430 be coated with the inorganic coating layer 440 and the positive composite layer be not coated with the inorganic coating layer 440. In other words, the separator 430 may be covered with the inorganic coating layer 430, the positive composite layer may not be covered with the inorganic coating layer 440. With this setup, the insulation breakdown of the inorganic coating layer 440 is prevented, and it is possible to suppress the lowering in charge-discharge cycle characteristics or to attain the enhancement in charge-discharge cycle characteristics. Thus, in the energy storage device 10, it is possible to attain the enhancement in high rate cycle endurance at high temperature. For example, in the case where polyethylene is used as the separator, when the surface potential of the positive electrode becomes high, there is a case where the insulation properties are lowered due to oxidation of the separator and the discharge capacity decreases. Although an inorganic coating layer is disposed between the positive electrode and the separator in order to suppress the discharge capacity from decreasing, by allowing the inorganic coating layer to be formed on the separator surface, the partial breakdown of the insulation due to the variation in coating thickness caused by the unevenness on the positive active material layer surface and the expansion or contraction of the positive electrode during the charge-discharge can be avoided during the charge-discharge cycle.

The inorganic coating layer may be coated on surfaces of both surfaces of the separator 430.

Moreover, it is preferred that the thickness of the inorganic coating layer 440 be greater than or equal to 0.1 µm and less than or equal to 10 µm.

It is desirable that the inorganic coating layer 440 be formed by applying a solution prepared by dispersing inorganic particles and a binder in a solvent to the separator 430. Examples of the binder include a resin-based binder of polyacrylonitrile, polyvinylidene fluoride, a copolymer of vinylidene fluoride and hexafluoropropylene, polytetrafluoroethylene, polyhexafluoropropylene, polyethylene oxide, polypropylene oxide, polyphosphazene, polysiloxane, polyvinyl acetate, polyvinyl alcohol, polymethyl methacrylate, polyacrylic acid, polymethacrylic acid, styrene-butadiene rubber, nitrile-butadiene rubber, polystyrene or a polycarbonate. In particular, from the point of electrochemical stability, polyacrylonitrile, polyvinylidene fluoride, polyhexafluoropropylene or polyethylene oxide is preferred. Moreover, it is especially preferred that the binder used in the present embodiment be polyvinylidene fluoride (PVDF), polyacrylic acid, polymethacrylic acid or styrene-butadiene rubber (SBR).

The inorganic coating layer 440 may be bonded to the positive composite layer 412. That is, the inorganic coating layer 440 needs only to be disposed between the positive electrode 410 and the separator 430, and with this setup, the liquid holding characteristics are enhanced, and moreover, the charge-discharge is suppressed from becoming uneven. Thus, the charge-discharge cycle characteristics such as the discharge capacity retention ratio are enhanced.

### EXAMPLES

### [Examples]

Next, it will be described in detail that the energy storage device 10 having the above-mentioned configuration is capable of attaining the enhancement in high rate cycle endurance at high temperature will be described.

### (1) Preparation of energy storage device 10

First, the preparation method of the energy storage device 10 will be described. Specifically, the preparation of batteries as energy storage devices in Examples 1 to 36 and Comparative Examples 1 to 20 described later was performed in the following manner. In this connection, any of Examples 1 to 36 is one relating to the energy storage device 10 according to the above-described embodiment.

### (1-1) Preparation of positive electrode

As the positive active material, LiₐNi_{b}Co_{c}Mn_{d}O₂ (0 ≤ a ≤ 1.2, 0 ≤ b ≤ 1, 0.1 ≤ c ≤ 0.6, 0 ≤ d ≤ 0.5 and b + c + d = 1) was used. Moreover, acetylene black as the conductive assistant and PVDF as the binder were used, and the positive active material, the conductive assistant and the binder were blended so that their respective contents become 90% by mass, 5% by mass and 5% by mass. Moreover, as the positive substrate layer, a sheet of aluminum foil with a thickness of 20 µm (or a sheet of foil including an undercoat layer formed on the aluminum foil surface) was used. And then, a coating agent composed of the positive active material, the conductive assistant and the binder was applied on the positive substrate layer so as to be formed into a foil shape and was dried, after which pressing was performed so that the positive composite layer has a press porosity of 33% (40% in the case where an undercoat layer is formed).

With regard to Examples 1, 5 to 20 and Comparative Examples 3, 9 to 17, 23 to 25, 33 to 34, the above-mentioned Co composition ratio was set to 0.3 to perform the preparation of the positive electrode. With regard to other Examples and Comparative Examples, respectively, the above-mentioned Co composition ratio was changed in a range of 0.05 to 0.66 to perform the preparation of the positive electrode.

### (1-2) Preparation of negative electrode

As the negative active material, the hard carbon (HC: hardly graphitizable carbon) or the graphite (Graphite) was used. Moreover, PVDF as the binder was used, and the negative active material and the binder were blended so that their respective contents become 93% by mass and 7% by mass. Moreover, as the negative substrate layer, a sheet of copper foil with a thickness of 10 µm was used, and the negative active material, the conductive assistant and the binder were added with N-methyl-2-pyrrolidone (NMP) to be kneaded, were applied so as to be formed into a foil shape and were dried, after which pressing was performed so that the negative composite layer has a press porosity of 30%.

With regard to Examples 1 to 36 and Comparative Examples 1, 2, 9, 12 to 20, as the negative active material, the hard carbon (HC) was used. Moreover, with regard to Comparative Examples 3 to 8, 10, 11, as the negative active material, the graphite was used.

Moreover, with regard to Examples 1 to 5, 11 to 36 and Comparative Examples 1 to 11, 16 to 20, the D50 particle diameter of the above-mentioned negative active material was set to 4 µm to perform the preparation of the negative electrode. With regard to other Examples and Comparative Examples, respectively, the D50 particle diameter of the above-mentioned negative active material was changed in a range of 1 to 15 µm to perform the preparation of the negative electrode.

Moreover, with regard to Examples 1 to 10, 21 to 36 and Comparative Examples 1, 2, 9, 12 to 15, 18 to 20, the proportion of a D90 particle diameter of the negative active material to the thickness of the negative composite layer on one side (hereinafter, described as the negative D90 particle diameter/thickness of negative composite layer on one side) was set to 0.2 to perform the preparation of the negative electrode. Moreover, with regard to Comparative Examples 3 to 8, 10, 11, the D90 particle diameter of the negative active material/thickness of negative composite layer on one side was set to 0.3 to perform the preparation of the negative electrode. With regard to other Examples and Comparative Examples, respectively, the D90 particle diameter of the negative active material/thickness of negative composite layer on one side was changed in a range of 0.05 to 0.8 to perform the preparation of the negative electrode.

In Examples 1 to 36 and Comparative Examples 1 to 20, by allowing the negative active material to have a D90 particle diameter of 7 µm, the negative D90 particle diameter of the native active material/thickness of negative composite layer on one side was set. For example, in the case where the D90 particle diameter of the negative active material/thickness of negative composite layer on one side is 0.2, the thickness of the negative composite layer on one side is 35 µm, and in the case where the D90 particle diameter of the negative active material/thickness of negative composite layer on one side is 0.07, the thickness of the negative composite layer on one side is 100 µm.

### (1-3) Preparation of separator

As the separator, a polyolefin-made microporous membrane with an air permeability of 120 seconds/100cc and a thickness of 15 µm was used.

### (1-4) Preparation of inorganic coating layer

Inorganic particles (alumina particles), a binder (acrylic acid) and the like were mixed to prepare a coating agent constituting the inorganic coating layer. In the above-mentioned coating agent, the inorganic particles and the binder were blended so that their respective contents become 97% by mass and 3% by mass.

In Examples 1 to 4, 6 to 36 and Comparative Examples 1 to 8, 12 to 20, the above-mentioned coating agent was coated on the separator by a gravure coating method, after which the coating agent was dried at 80°C to prepare an inorganic coating layer which is bonded to the separator and has a thickness of 5 µm.

Moreover, in Example 5 and Comparative Example 10, the above-mentioned coating agent was coated on the positive composite layer by a gravure coating method, after which the coating agent was dried at 80°C to prepare an inorganic coating layer which is bonded to the positive composite layer and has a thickness of 5 µm.

Moreover, in Comparative Example 9 and Comparative Example 11, an inorganic coating layer is not formed.

### (1-5) Preparation of nonaqueous electrolyte

With regard to the nonaqueous electrolyte, in a mixed solvent of propylene carbonate (PC) : dimethyl carbonate (DMC) : ethyl methyl carbonate (EMC) = 3 : 2 : 5 (volume ratio), LiPF₆ as an electrolyte salt was dissolved so that the concentration thereof becomes 1 mol/L. As an additive reagent, a known additive reagent may be added thereto.

### (1-6) Preparation of battery

The positive electrode, the negative electrode and the separator were layered and wound so that the inorganic coating layer is disposed between the separator and the positive electrode, after which the wound body was inserted into a container, the nonaqueous electrolyte was injected thereinto, and the injection port was sealed.

### (2) Evaluation items for positive electrode

In this context, with regard to the positive electrode, in order to determine respective numerical values, the evaluation tests were performed in the following manner. In this connection, in all the tests, respective average values of 10 samples were determined.

### (2-1) Removal of positive electrode from battery

The battery in a discharged state (2V) was disassembled, the positive electrode was removed and thoroughly washed with DMC, and vacuum drying was performed at 25°C. The following tests were performed using samples all of which have been washed and dried.

### (2-2) Positive active material composition ratio

The positive composite layer was peeled off by a utility knife so as not to be contaminated with the foil, and with regard to the composite portion, a quantitative analysis of an element was performed by ICP-AES. In this connection, among the elements detected by the ICP-AES, since carbon (C) is an element derived from the conductive assistant and the binder, the carbon (C) was excluded to calculate a composition ratio of the positive active material. The measurement was performed 3 times, and the average value thereof was defined as the composition ratio.

### (3) Evaluation items for negative electrode

Moreover, with regard to the negative electrode, in order to determine respective numerical values, the evaluation tests were performed in the following manner. In this connection, in all the tests, respective average values of 10 samples were determined.

### (3-1) Removal of negative electrode from battery

The battery in a discharged state (2V) was disassembled, the negative electrode was removed and thoroughly washed with DMC, and vacuum drying was performed at 25°C. The following tests were performed using the samples all of which have been washed and dried.

### (3-2) Thickness of negative composite layer on one side

The thickness L of a negative composite applied part was measured using a micrometer. Afterward, the composite was peeled off by acetone or NMP, and the foil thickness Lb after peeling was measured. And then, by the formula of (L - Lb)/2, the coating thickness of the negative composite layer on one side was determined. In this connection, the solvent used for peeling off the composite is not particularly restricted as long as the negative substrate layer (foil) is not corroded therewith. Moreover, the measurement was performed 5 times per one sample, and the average value thereof was defined as the thickness of the negative composite layer on one side for the sample. Thicknesses of the negative composite layer on one side obtained from 5 samples were averaged to determine the thickness of negative composite layer on one side.

### (3-3) D50 and D90 particle diameters of the negative active material

The negative electrode was subjected to a CP (cross section polishing) processing to observe the cross section with an SEM. Diameters of at least 500 active material particles selected at random were measured, a cumulative volume value calculated in the case where the particle is considered to have a spherical shape and the particles are counted from the smaller particle diameter was determined, and a particle diameter obtained when the cumulative volume value exceeds 50% was defined as the D50 particle diameter and a particle diameter obtained when the cumulative volume value exceeds 90% was defined as the D90 particle diameter. In this context, the diameter of an active material particle refers to the diameter of the minimum circumscribed circle circumscribing an active material particle observed.

### (4) Evaluation test

Next, the following numerical values were determined to perform the evaluation tests for the battery. In all the tests, respective average values of 3 samples were determined.

### (4-1) Confirmation test for capacity

The following test was performed in a thermostatic chamber at 25°C. First, a 4-A constant-current discharge test was performed at a lower limit voltage of 2.4 V (4-1a), and next, 4-A constant-current constant-voltage charging was performed for 3 hours at an upper limit voltage of 4.1 V, after which 4-A constant-current discharging as a discharge test was performed at a lower limit voltage of 2.4 V (4-1b). And then, the current capacity at the time of discharging in the (4-1b) was defined as the battery capacity.

### (4-2) Output power test at 25°C

The 1 C (A) was determined by the immediately preceding confirmation test for capacity, constant-current discharging at a lower limit voltage of 2.4 V was performed at 25°C and 1.0 C (A), and the SOC (State of Charge) was adjusted to 50% over a period of 1-hour charging time at 25°C and 0.5 C (A) from the discharge state. And then, discharging was performed at a temperature of 25°C and a current of 40 C (A), the resistance D1 at the end of 1 second was calculated by the equation of the resistance D1 at the end of 1 second = (the difference between the voltage at the end of 1 second and the voltage before the energization)/the current, and the output power W1 at the end of 1 second was calculated by the equation of the output power W1 at the end of 1 second = (the voltage before the energization - the lower limit voltage)/D1 × the lower limit voltage. Moreover, similarly, the resistance D2 at the end of 10 seconds was calculated by the equation of the resistance D2 at the end of 10 seconds = (the difference between the voltage at the end of 10 seconds and the voltage before the energization)/the current, and the output power W2 at the end of 10 seconds was calculated by the equation of the output power W2 at the end of 10 seconds = (the voltage before the energization - the lower limit voltage)/D2 × the lower limit voltage.

### (4-3) Battery cycle test

First, the 1 C (A) was determined by the immediately preceding confirmation test for capacity, constant-current discharging at a lower limit voltage of 2.4 V was performed at 25°C and 1.0 C (A), constant-current charging was performed over a period of 1-hour charging time at 0.5 C (A) from the discharge state, and the SOC (State of Charge) was adjusted to 50% (4-3a). Next, the battery was stored at an environmental temperature of 50°C for 4 hours or more to make the internal temperature of the battery uniform, after which the battery was discharged at a current of 10 C (A) for 108 seconds, and then, charged at a current of 10 C (A) for 216 seconds (4-3b). The discharging voltage at the end of 108 seconds and the charging voltage at the end of 216 seconds were defined as the cycle lower limit voltage and the cycle upper limit voltage, respectively. Next, the constant-current charge-discharge was performed at a current value of 10 C (A) and at a voltage value between the cycle upper limit voltage and the cycle lower limit voltage while the surface temperature of the battery is adjusted so as to become 50°C (4-3c). The cycle was stopped at the timing of termination of discharging every 2500 cycles, and the battery was cooled to 25°C, after which the confirmation test for capacity and the output power test at 25°C were performed. And then, the test in the (4-3c) was performed until the cumulative number of cycles reached 20000 cycles.

In this context, the electric capacity determined when the discharge is performed from the upper limit voltage to the lower limit voltage at the 10th cycle is defined as the discharge capacity at the 10th cycle. Moreover, the electric capacity determined when the discharge is performed from the upper limit voltage to the lower limit voltage at the 20000th cycle is defined as the discharge capacity at the 20000th cycle.

Moreover, the discharge capacity retention ratio defined by the equation of the discharge capacity retention ratio (%) = (the discharge capacity at the 20000th cycle/the discharge capacity at the 10th cycle) × 100 was calculated.

At the time of performing the above-mentioned battery cycle test, in order to prevent the expansion of a battery, the battery was compressed within a distance less than or equal to the length of (initial thickness of the battery + 1 mm) by metal plates, and as necessary, air cooling for the surface temperature stabilization was performed.

### (5) Evaluation results

The discharge capacity retention ratios of batteries in Examples 1 to 36 and Comparative Examples 1 to 20 prepared by allowing the positive Co composition ratio, the kind of the negative active material, the D50 particle diameter, the D90 particle diameter of the negative active material/thickness of negative composite layer on one side, and the arrangement of the inorganic coating layer to be changed as stated above are shown in Table 1 to Table 5.

First, with reference to the following Table 1 and Table 2, Examples 1 to 5 and Comparative Examples 1 to 11 will be described. As shown in the following Table 1, in Examples 1 to 4 and Comparative Examples 1 to 2, discharge capacity retention ratios of batteries prepared in the case where the kind of the negative active material (HC), the D50 particle diameter, the D90 particle diameter/thickness of negative composite layer on one side, and the arrangement of the inorganic coating layer are fixed and the positive Co composition ratio is changed are exhibited.

Moreover, in Comparative Examples 3 to 8, discharge capacity retention ratios of batteries prepared in the case where the kind of the negative active material (Graphite), the D50 particle diameter, the D90 particle diameter of the negative active material/thickness of negative composite layer on one side, and the arrangement of the inorganic coating layer are fixed and the positive Co composition ratio is changed are exhibited.

In this connection, "Positive Co composition ratio" in Table 1 refers to the value of c in LiₐNi_{b}Co_{c}Mn_{d}O₂ constituting the positive active material, "Negative active material" refers to the kind of the material used for the negative active material, "Negative D50 particle diameter" refers to the D50 particle diameter of the negative active material, "Negative D90 particle diameter/Thickness of negative composite layer on one side" refers to the proportion of a D90 particle diameter of the negative active material to the thickness of the negative composite layer 422 on one side, and "Arrangement of inorganic coating layer" refers to the position on which the inorganic coating layer is formed. Moreover, "Discharge capacity retention ratio" refers to the relative value of the electric capacity determined when the discharge is performed from the upper limit voltage to the lower limit voltage at the 20000th cycle in the case where the electric capacity determined when the discharge is performed from the upper limit voltage to the lower limit voltage at the 10th cycle is defined as 100. Moreover, the same definitions as those in Table 1 hold for the following Table 2 to Table 5.

Moreover, as shown in the following Table 2, in Examples 1, 5 and Comparative Example 9, discharge capacity retention ratios of batteries prepared in the case where the positive Co composition ratio, the kind of the negative active material (HC), the negative D50 particle diameter, and the negative D90 particle diameter/thickness of negative composite layer on one side (0.2) are fixed and the arrangement of the inorganic coating layer is changed are exhibited.

Moreover, in Comparative Examples 3, 10 and 11, discharge capacity retention ratios of batteries prepared in the case where the positive Co composition ratio, the kind of the negative active material (Graphite), the negative D50 particle diameter, and the negative D90 particle diameter/thickness of negative composite layer on one side (0.3) are fixed and the arrangement of the inorganic coating layer is changed are exhibited.

**[Table 1]**

| | Positive Co composition ratio | Negative active material | Negative D50 particle diameter (µm) | Negative D90 particle diameter/ Thickness of negative composite layer on one side | Arrangement of inorganic coating layer | Discharge capacity retention ratio (%) |
|---|---|---|---|---|---|---|
| | | | | | | 20000 Cy discharge capacity/10 Cy discharge capacity × 100 |
| Example 1 | 0.3 | HC | 4.0 | 0.2 | On separator | 88 |
| Example 2 | 0.1 | HC | 4.0 | 0.2 | On separator | 87* |
| Example 3 | 0.2 | HC | 4.0 | 0.2 | On separator | 87 |
| Example 4 | 0.4 | HC | 4.0 | 0.2 | On separator | 86 |
| Comparative Example 1 | 0.5 | HC | 4.0 | 0.2 | On separator | 79 |
| Comparative Example 2 | 0.6 | HC | 4.0 | 0.2 | On separator | 77 |
| Comparative Example 3 | 0.3 | Graphite | 4.0 | 0.3 | On separator | 73 |
| Comparative Example 4 | 0.1 | Graphite | 4.0 | 0.3 | On separator | 72 |
| Comparative Example 5 | 0.2 | Graphite | 4.0 | 0.3 | On separator | 71 |
| Comparative Example 6 | 0.4 | Graphite | 4.0 | 0.3 | On separator | 72 |
| Comparative Example 7 | 0.5 | Graphite | 4.0 | 0.3 | On separator | 71 |
| Comparative Example 8 | 0.6 | Graphite | 4.0 | 0.3 | On separator | 70 |

**[Table 2]**

| | Positive Co composition ratio | Negative active material | Negative D50 particle diameter (µm) | Negative D90 particle diameter/ Thickness of negative composite layer on one side | Arrangement of inorganic coating layer | Discharge capacity retention ratio (%) |
|---|---|---|---|---|---|---|
| | | | | | | 20000 Cy discharge capacity/10 Cy discharge capacity × 100 |
| Example 1 | 0.3 | HC | 4.0 | 0.2 | On separator | 88 |
| Example 5 | 0.3 | HC | 4.0 | 0.2 | On positive composite layer | 84 |
| Comparative Example 9 | 0.3 | HC | 4.0 | 0.2 | Without inorganic coating layer | 78 |
| Comparative Example 3 | 0.3 | Graphite | 4.0 | 0.3 | On separator | 73 |
| Comparative Example 10 | 0.3 | Graphite | 4.0 | 0.3 | On positive composite layer | 72 |
| Comparative Example 11 | 0.3 | Graphite | 4.0 | 0.3 | Without inorganic coating layer | 66 |

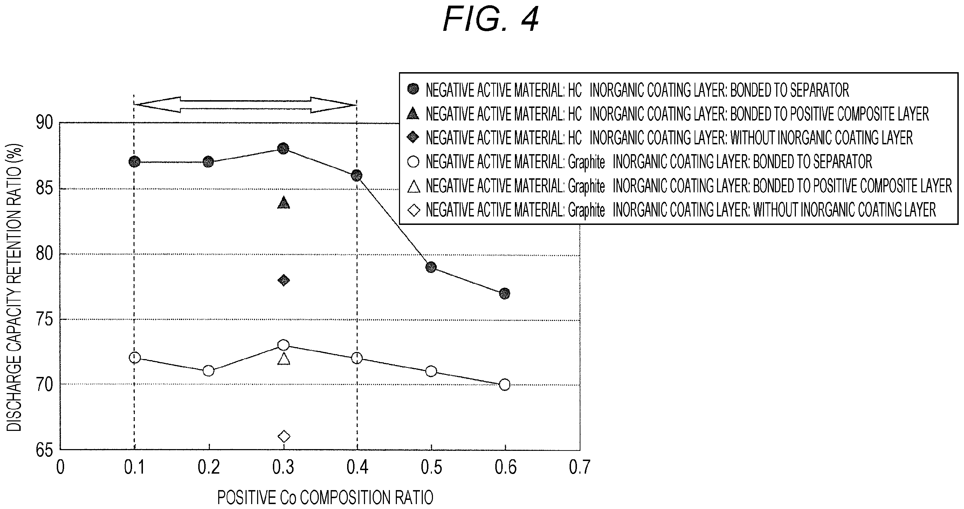

FIG. 4 is a graphical representation showing the discharge capacity retention ratio in the case where the positive Co composition ratio is changed. Specifically, the FIG. 4 is one in which "Positive Co composition ratio" in Table 1 and Table 2 is taken as abscissa, "Discharge capacity retention ratio" is taken as ordinate, and the relationship therebetween is graphically shown.

As shown in the above-mentioned Table 1 and FIG. 4, in the cases where the positive Co composition ratio is greater than or equal to 0.1 and less than or equal to 0.4, the negative active material is constituted of the hard carbon (HC), and the inorganic coating layer 440 is formed on the separator 430 (Examples 1 to 4), discharge capacity retention ratios greater than or equal to 80% can be secured and the enhancement in high rate cycle endurance at high temperature can be attained.

Furthermore, as shown in Table 2 and FIG. 4, even in the case where the positive Co composition ratio is 0.3, the negative active material is constituted of the hard carbon (HC), and the inorganic coating layer 440 is formed on the positive composite layer 412 (Example 5), discharge capacity retention ratio greater than or equal to 80% can be secured and the enhancement in high rate cycle endurance can be attained.

In this connection, the discharge capacity retention ratio in the case where the inorganic coating layer 440 is formed on the separator 430 (Example 1) is higher than that in the case where the inorganic coating layer 440 is formed on the positive composite layer 412 (Example 5). This is because, if anything, in the case where the inorganic coating layer 440 is formed on the separator 430, the partial breakdown of the insulation can be avoided from being easily generated during the charge-discharge cycle due to the variation in coating thickness caused by the unevenness on the positive active material layer surface and the expansion or contraction of the positive electrode during the charge-discharge. Thus, it is preferred that the inorganic coating layer 440 be bonded to the separator 430 and be separate from the positive composite layer 412. In other words, it is preferred that the inorganic coating layer 440 be not bonded to the positive composite layer 412.

In contrast, as shown in Table 1, Table 2 and FIG. 4, in the cases where the negative active material is constituted of the graphite (Graphite) (Comparative Examples 3 to 8, 10, 11), irrespective of the presence (on the separator and on the positive composite layer) or absence of the inorganic coating layer, the deterioration in discharge capacity retention ratio is significant. Moreover, even when the positive Co composition ratio is 0.3 and the negative active material is constituted of the hard carbon (HC), the deterioration in discharge capacity retention ratio is significant also in the case where an inorganic coating layer is not formed between the separator and the positive electrode (Comparative Example 9).

In the case where the graphite (black lead-based one) is used as the negative active material, since there is almost no SOC-electric potential gradient, it is thought that the charge-discharge variation recovery function is lowered, and furthermore, the deterioration caused by the charge-discharge cycle readily proceeds. In the energy storage device 10 according to the present embodiment, it is thought that the ion path resistance is made uniform during the charge-discharge by allowing the hard carbon (hardly graphitizable carbon) with a specific particle diameter to be used as the negative active material, and furthermore, the discharge capacity retention ratio at the time of the charge-discharge cycle is enhanced since the SOC-electric potential is inclined at a certain level of gradient and the variation in depth of charge-discharge is suppressed from being generated in the negative electrode.

From the results shown in Table 1, Table 2 and FIG. 4, the energy storage device 10 according to the present embodiment is one that is provided with the inorganic coating layer 440 disposed between the positive electrode 410 and the separator 430, allows the positive active material to contain a compound represented by a LiₐNi_{b}Co_{c}M_{d}-based composite oxide (satisfying the equations of 0 ≤ a ≤ 1.2, 0 ≤ b ≤ 1, 0.1 ≤ c ≤ 0.4, 0 ≤ d ≤ 0.5 and b + c + d = 1, and M denotes at least one kind of element selected from the group consisting of Mn, Ti, Cr, Fe, Co, Cu, Zn, Al, Ge, Sn and Mg) with a Co composition ratio greater than or equal to 0.1 and less than or equal to 0.4, and allows the negative active material to contain hardly graphitizable carbon.

Next, with reference to the following Table 3, Examples 1, 6 to 10 and Comparative Examples 12 to 15 will be described. As shown in the following Table 3, in Examples 1, 6 to 10 and Comparative Examples 12 to 15, discharge capacity retention ratios of batteries prepared in the case where the positive Co composition ratio, the kind of the negative active material (HC), the negative D90 particle diameter/thickness of negative composite layer on one side, and the arrangement of the inorganic coating layer are fixed and the negative D50 particle diameter is changed are exhibited.

**[Table 3]**

| | Positive Co composition ratio | Negative active material | Negative D50 particle diameter (µm) | Negative D90 particle diameter/ Thickness of negative composite layer on one side | Arrangement of inorganic coating layer | Discharge capacity retention ratio (%) |
|---|---|---|---|---|---|---|
| | | | | | | 20000 Cy discharge capacity/10 Cy discharge capacity × 100 |
| Example 1 | 0.3 | HC | 4.0 | 0.2 | On separator | 88 |
| Example 6 | 0.3 | HC | 1.0 | 0.2 | On separator | 84 |
| Example 7 | 0.3 | HC | 2.0 | 0.2 | On separator | 86 |
| Example 8 | 0.3 | HC | 3.0 | 0.2 | On separator | 89 |
| Example 9 | 0.3 | HC | 5.0 | 0.2 | On separator | 90 |
| Example 10 | 0.3 | HC | 6.0 | 0.2 | On separator | 87 |
| Comparative Example 12 | 0.3 | HC | 7.0 | 0.2 | On separator | 79 |
| Comparative Example 13 | 0.3 | HC | 8.0 | 0.2 | On separator | 76 |
| Comparative Example 14 | 0.3 | HC | 10.0 | 0.2 | On separator | 72 |
| Comparative Example 15 | 0.3 | HC | 15.0 | 0.2 | On separator | 70 |

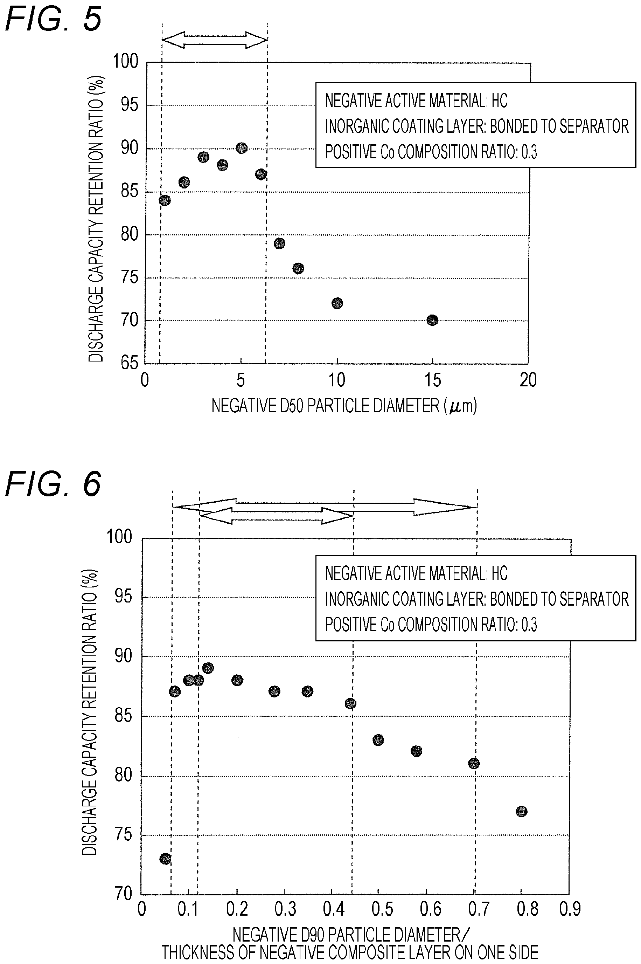

Moreover, FIG. 5 is a graphical representation showing the discharge capacity retention ratio in the case where the negative D50 particle diameter is changed. Specifically, the FIG. 5 is one in which "Negative D50 particle diameter" in Table 3 is taken as abscissa, "Discharge capacity retention ratio" is taken as ordinate, and the relationship therebetween is graphically shown.

As shown in the above-mentioned Table 3 and FIG. 5, in the case where the negative D50 particle diameter is greater than or equal to 1.0 µm and less than or equal to 6.0 µm, discharge capacity retention ratios greater than or equal to 80% can be secured and the enhancement in high rate cycle endurance at high temperature can be attained. In Examples 1 and 6 to 9, it is thought that the ion path resistance is made uniform during the charge-discharge by allowing the hard carbon with a specific particle diameter to be used as the negative active material. By allowing the ion path resistance to be made uniform, since the variation in depth of charge-discharge is suppressed from being generated in the negative electrode, it is thought that the discharge capacity retention ratio at the time of the charge-discharge cycle is enhanced.

From the results shown in Table 3 and FIG. 5, the energy storage device 10 according to the present embodiment is one that contains hardly graphitizable carbon with a D50 particle diameter greater than or equal to 1.0 µm and less than or equal to 6.0 µm as the negative active material.

Next, with reference to the following Table 4, Examples 1, 11 to 20 and Comparative Examples 16, 17 will be described. As shown in the following Table 4, in Examples 1, 11 to 20 and Comparative Examples 16, 17, discharge capacity retention ratios of batteries prepared in the case where the positive Co composition ratio, the kind of the negative active material (HC), the negative D50 particle diameter, and the arrangement of the inorganic coating layer are fixed and the negative D90 particle diameter/thickness of negative composite layer on one side is changed are exhibited.

**[Table 4]**

| | Positive Co composition ratio | Negative active material | Negative D50 particle diameter (µm) | Negative D90 particle diameter/ Thickness of negative composite layer on one side | Arrangement of inorganic coating layer | Discharge capacity retention ratio (%) 20000 Cy discharge capacity/ 10 Cy discharge capacity × 100 | Output power retention ratio (%) 20000 Cy output power/ Initial output power × 100 |
|---|---|---|---|---|---|---|---|
| Example 1 | 0.3 | HC | 4.0 | 0.2 | On separator | 88 | 100 |
| Example 11 | 0.3 | HC | 4.0 | 0.07 | On separator | 87 | 85 |
| Example 12 | 0.3 | HC | 4.0 | 0.1 | On separator | 88 | 89 |
| Example 13 | 0.3 | HC | 4.0 | 0.12 | On separator | 88 | 95 |
| Example 14 | 0.3 | HC | 4.0 | 0.14 | On separator | 89 | 98 |
| Example 15 | 0.3 | HC | 4.0 | 0.28 | On separator | 87 | 90 |
| Example 16 | 0.3 | HC | 4.0 | 0.35 | On separator | 87 | 89 |
| Example 17 | 0.3 | HC | 4.0 | 0.44 | On separator | 86 | 91 |
| Example 18 | 0.3 | HC | 4.0 | 0.5 | On separator | 83 | 86 |
| Example 19 | 0.3 | HC | 4.0 | 0.58 | On separator | 82 | 85 |
| Example 20 | 0.3 | HC | 4.0 | 0.7 | On separator | 81 | 86 |
| Comparative Example 16 | 0.3 | HC | 4.0 | 0.05 | On separator | 73 | 85 |
| Comparative Example 17 | 0.3 | HC | 4.0 | 0.8 | On separator | 77 | 80 |

Moreover, FIG. 6 is a graphical representation showing the discharge capacity retention ratio in the case where the negative D90 particle diameter/thickness of negative composite layer on one side is changed. Specifically, the FIG. 6 is one in which "Negative D90 particle diameter/Thickness of negative composite layer on one side" in Table 4 is taken as abscissa, "Discharge capacity retention ratio" is taken as ordinate, and the relationship therebetween is graphically shown.

As shown in the above-mentioned Table 4 and FIG. 6, in the case where the negative D90 particle diameter/thickness of negative composite layer on one side is greater than or equal to 0.07 and less than or equal to 0.7, discharge capacity retention ratios greater than or equal to 80% can be secured and the enhancement in high rate cycle endurance can be attained.

Furthermore, although not shown in Table 4 and FIG. 6, with regard to the initial output power and the output power at the end of 20000 cycles, when the output power in Example 1 is defined as 100, by allowing the negative D90 particle diameter/thickness of negative composite layer on one side to be 0.12 (Example 13) to 0.8 (Comparative Example 17), values greater than or equal to 80 are secured. In contrast, by allowing the negative D90 particle diameter/thickness of negative composite layer on one side to be 0.05 (Comparative Example 16), 0.07 (Example 11) or 0.1 (Example 12), the value is lowered to a value less than or equal to 70. Furthermore, with regard to the ratio of the output power at the end of 20000 cycles to the initial output power (the output power retention ratio shown in Table 4), when the ratio in Example 1 is defined as 100, by allowing the negative D90 particle diameter/thickness of negative composite layer on one side to be 0.1 (Example 12) to 0.44 (Example 17), ratios greater than or equal to 89 are secured. In contrast, in the case of allowing the negative D90 particle diameter/thickness of negative composite layer on one side to be greater than or equal to 0.5 (Examples 18 to 20), the ratio is lowered to a ratio less than or equal to 86. In other words, in the case of allowing the negative D90 particle diameter/thickness of negative composite layer on one side to be greater than or equal to 0.12 (Example 13) and less than or equal to 0.8 (Comparative Example 17), the initial output power and the output power at the end of 20000 cycles are enhanced, and in the case of allowing the negative D90 particle diameter/thickness of negative composite layer on one side to be greater than or equal to 0.1 (Example 12) and less than or equal to 0.44 (Example 17), the ratio of the output power at the end of 20000 cycles to the initial output power is heightened.

From the results shown in Table 4 and FIG. 6, in the energy storage device 10 according to the present embodiment, it is preferred that the negative D90 particle diameter/thickness of negative composite layer on one side be greater than or equal to 0.07 and less than or equal to 0.7. With this setup, the enhancement in high rate cycle endurance at high temperature can be attained.

Moreover, in the energy storage device 10 according to the present embodiment, it is preferred that the negative D90 particle diameter/thickness of negative composite layer on one side be greater than or equal to 0.12 and less than or equal to 0.44, from the viewpoints of the initial output power, the output power at the end of 20000 cycles, and the ratio of the output power at the end of 20000 cycles to the initial output power. With this setup, furthermore, the enhancement in high rate cycle endurance at high temperature and highly enhanced output can be attained.

Next, with reference to the following Table 5, Examples 1 to 4, 21 to 36 and Comparative Examples 1 to 2, 18 to 20 will be described. As shown in the following Table 5, in Examples 1 to 4, 21 to 36 and Comparative Examples 1 to 2, 18 to 20, discharge capacity retention ratios and output power retention ratios of batteries prepared in the case where the kind of the negative active material (HC), the negative D50 particle diameter, the negative D90 particle diameter/thickness of negative composite layer on one side and the arrangement of the inorganic coating layer are fixed and the positive Ni composition ratio, the positive Co composition ratio, and the positive Mn composition ratio are changed are exhibited. In this connection, "On separator" in Table 5 refers to allowing the inorganic coating layer to be disposed on the separator.

**[Table 5]**

| | Positive Ni composition ratio | Positive Co composition ratio | Positive Mn composition ratio | Negative active material | Negative D50 particle diameter (µm) | Negative D90 particle diameter/ Thickness of negative composite layer on one side | Arrangement of inorganic coating layer | Discharge capacity retention ratio (%) | Output power retention ratio (%) |
|---|---|---|---|---|---|---|---|---|---|
| | | | | | | | | 20000 Cy discharge capacity / 10 Cy discharge capacity (%) | 20000 Cy output power / Initial output power (%) |
| Example 1 | 0.33 | 0.33 | 0.33 | HC | 4.0 | 0.2 | On separator | 88 | 100 |
| Example 2 | 0.60 | 0.10 | 0.30 | HC | 4.0 | 0.2 | On separator | 87 | 99 |
| Example 3 | 0.60 | 0.20 | 0.20 | HC | 4.0 | 0.2 | On separator | 87 | 100 |
| Example 4 | 0.40 | 0.40 | 0.20 | HC | 4.0 | 0.2 | On separator | 86 | 100 |
| Example 21 | 0.50 | 0.20 | 0.30 | HC | 4.0 | 0.2 | On separator | 87 | 95 |
| Example 22 | 0.40 | 0.20 | 0.40 | HC | 4.0 | 0.2 | On separator | 85 | 96 |
| Example 23 | 0.50 | 0.30 | 0.20 | HC | 4.0 | 0.2 | On separator | 87 | 96 |
| Example 24 | 0.40 | 0.30 | 0.30 | HC | 4.0 | 0.2 | On separator | 85 | 97 |
| Example 25 | 0.30 | 0.30 | 0.40 | HC | 4.0 | 0.2 | On separator | 86 | 98 |
| Example 26 | 0.30 | 0.40 | 0.30 | HC | 4.0 | 0.2 | On separator | 88 | 97 |
| Example 27 | 0.70 | 0.15 | 0.15 | HC | 4.0 | 0.2 | On separator | 83 | 89 |
| Example 28 | 0.50 | 0.10 | 0.40 | HC | 4.0 | 0.2 | On separator | 84 | 86 |
| Example 29 | 0.80 | 0.10 | 0.10 | HC | 4.0 | 0.2 | On separator | 79 | 77 |
| Example 30 | 0.80 | 0.20 | 0.00 | HC | 4.0 | 0.2 | On separator | 71 | 76 |
| Example 31 | 0.70 | 0.20 | 0.10 | HC | 4.0 | 0.2 | On separator | 76 | 79 |
| Example 32 | 0.30 | 0.20 | 0.50 | HC | 4.0 | 0.2 | On separator | 79 | 93 |
| Example 33 | 0.20 | 0.30 | 0.50 | HC | 4.0 | 0.2 | On separator | 79 | 95 |
| Example 34 | 0.60 | 0.30 | 0.10 | HC | 4.0 | 0.2 | On separator | 73 | 86 |
| Example 35 | 0.20 | 0.40 | 0.40 | HC | 4.0 | 0.2 | On separator | 79 | 90 |
| Example 36 | 0.50 | 0.40 | 0.10 | HC | 4.0 | 0.2 | On separator | 77 | 84 |
| Comparative Example 1 | 0.40 | 0.50 | 0.10 | HC | 4.0 | 0.2 | On separator | 79 | 100 |
| Comparative Example 2 | 0.30 | 0.60 | 0.10 | HC | 4.0 | 0.2 | On separator | 77 | 100 |
| Comparative Example 18 | 0.55 | 0.05 | 0.40 | HC | 4.0 | 0.2 | On separator | 77 | 95 |
| Comparative Example 19 | 0.30 | 0.50 | 0.20 | HC | 4.0 | 0.2 | On separator | 81 | 90 |
| Comparative Example 20 | 0.17 | 0.66 | 0.17 | HC | 4.0 | 0.2 | On separator | 81 | 92 |

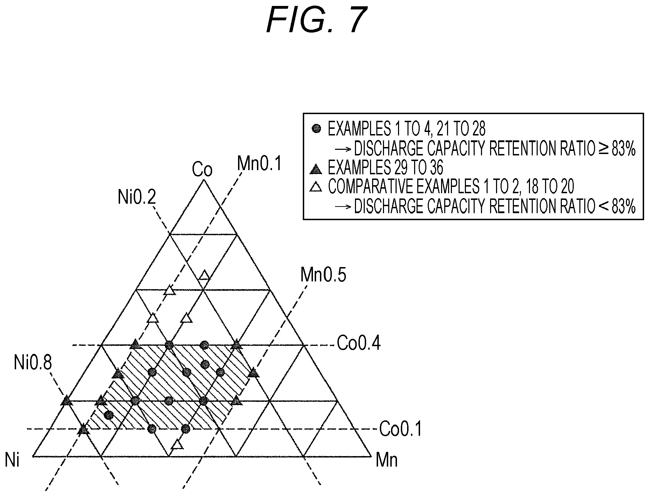

Moreover, FIG. 7 is a ternary diagram of Ni, Co and Mn contained in a positive active material of Examples 1 to 4, 21 to 36 and Comparative Examples 1 to 2, 18 to 20. In the ternary diagram shown in the figure, Examples 1 to 4, 21 to 28 (points of filled circle in FIG. 7), Examples 29 to 36 (points of filled triangle in FIG. 7) and Comparative Examples 1 to 2, 18 to 20 (points of outlined triangle in FIG. 7) are plotted.

In this context, with regard to Examples 1 to 4, 21 to 28 (points of filled circle) positioned in the central area of the ternary diagram, discharge capacity retention ratios greater than or equal to 83% can be secured and further enhancement in high rate cycle endurance at high temperature can be attained. That is, as shown in the above-mentioned Table 5 and FIG. 7, in the cases where the positive Co composition ratio is greater than or equal to 0.1 and less than or equal to 0.4, the positive Ni composition ratio is greater than 0.2 and less than 0.8, and the positive Mn composition ratio is greater than 0.1 and less than 0.5 (Examples 1 to 4, 21 to 28), discharge capacity retention ratios greater than or equal to 83% can be secured and further enhancement in high rate cycle endurance at high temperature can be attained.

Furthermore, as shown in the above-mentioned Table 5 and FIG. 7, in the cases where the positive Co composition ratio is greater than or equal to 0.1 and less than or equal to 0.4, the positive Ni composition ratio is greater than 0.2 and less than 0.7, and the positive Mn composition ratio is greater than 0.1 and less than 0.5 (Examples 1 to 4, 21 to 26, 28), discharge capacity retention ratios greater than or equal to 84% can be secured and further enhancement in high rate cycle endurance at high temperature can be attained.

Furthermore, as shown in the above-mentioned Table 5 and FIG. 7, in the cases where the positive Co composition ratio is greater than or equal to 0.1 and less than or equal to 0.4, the positive Ni composition ratio is greater than 0.2 and less than 0.8, and the positive Mn composition ratio is greater than or equal to 0.2 and less than 0.4 (Examples 1 to 4, 21, 23 to 24, 26), discharge capacity retention ratios greater than or equal to 85% can be secured and further enhancement in high rate cycle endurance at high temperature can be attained.

Furthermore, as shown in the above-mentioned Table 5 and FIG. 7, in the case where the positive Co composition ratio is greater than or equal to 0.2 and less than or equal to 0.4, the positive Ni composition ratio is greater than 0.2 and less than 0.8, and the positive Mn composition ratio is greater than 0.1 and less than 0.5 (Examples 1, 3 to 4, 21 to 26), discharge capacity retention ratios greater than or equal to 85% can be secured and further enhancement in high rate cycle endurance at high temperature can be attained.

As stated above, the energy storage device 10 according to the present embodiment is one that is provided with the inorganic coating layer 440 disposed between the positive electrode 410 and the separator 430, allows the positive active material to contain a compound represented by a LiₐNi_{b}Co_{c}M_{d}-based composite oxide (satisfying the equations of 0 ≤ a ≤ 1.2, 0 ≤ b ≤ 1, 0.1 ≤ c ≤ 0.4, 0 ≤ d ≤ 0.5 and b + c + d = 1, and M denotes at least one kind of element selected from the group consisting of Mn, Ti, Cr, Fe, Co, Cu, Zn, Al, Ge, Sn and Mg) with a Co composition ratio greater than or equal to 0.1 and less than or equal to 0.4, and allows the negative active material to contain hardly graphitizable carbon. Moreover, the negative electrode contains hardly graphitizable carbon with a D50 particle diameter greater than or equal to 1.0 µm and less than or equal to 6.0 µm as the negative active material. As a result of extensive researches and experiments, the present inventors have found that the high rate cycle endurance at high temperature can be enhanced since satisfactory charge-discharge cycle characteristics can be maintained even in a high rate cycle at high temperature in which the charge-discharge is performed, for example, at a current of 10 C (A).

Moreover, as a result of extensive researches and experiments, the present inventors have found that the insulation breakdown of the inorganic coating layer 440 can be prevented, and furthermore, the lowering in charge-discharge cycle characteristics can be suppressed or the enhancement in charge-discharge cycle characteristics can be attained, in the case where the inorganic coating layer 440 is bonded to the separator 430 and is separate from the positive composite layer 412. Thus, in the energy storage device 10 according to the present embodiment, by allowing the inorganic coating layer 440 to be bonded to the separator 430 and not to be bonded to the positive composite layer 412, furthermore, the enhancement in high rate cycle endurance can be attained.

Moreover, as a result of extensive researches and experiments, furthermore, the present inventors have found that the lowering in discharge capacity retention ratio can be suppressed or the enhancement in discharge capacity retention ratio can be attained, in the case where the proportion of a D90 particle diameter of the negative active material to the thickness of the negative composite layer 422 disposed at one side of the negative substrate layer 421 is greater than or equal to 0.07 and less than or equal to 0.7. Thus, in the energy storage device 10, by allowing the proportion to be greater than or equal to 0.07 and less than or equal to 0.7, furthermore, the enhancement in high rate cycle endurance at high temperature can be attained.

Moreover, as a result of extensive researches and experiments, furthermore, the present inventors have found that the lowering in discharge capacity retention ratio can be suppressed or the enhancement in discharge capacity retention ratio can be attained, and highly enhanced output can be attained, in the case where the proportion of a D90 particle diameter of the negative active material to the thickness of the negative composite layer 422 disposed at one side of the negative substrate layer 421 is greater than or equal to 0.12 and less than or equal to 0.44. Thus, in the energy storage device 10, by allowing the proportion to be greater than or equal to 0.12 and less than or equal to 0.44, furthermore, the enhancement in high rate cycle endurance at high temperature can be attained and the highly enhanced output can be attained.

Moreover, as a result of extensive researches and experiments, furthermore, the present inventors have found that the enhancement in discharge capacity retention ratio can be attained, in the case where the positive Co composition ratio is greater than or equal to 0.1 and less than or equal to 0.4, the positive Ni composition ratio is greater than 0.2 and less than 0.8, and the positive Mn composition ratio is greater than 0.1 and less than 0.5. Thus, in the energy storage device 10, by allowing the positive Co composition ratio to be greater than or equal to 0.1 and less than or equal to 0.4, allowing the positive Ni composition ratio to be greater than 0.2 and less than 0.8, and allowing the positive Mn composition ratio to be greater than 0.1 and less than 0.5, furthermore, the enhancement in high rate cycle endurance at high temperature can be attained.

Hereinabove, the energy storage device 10 according to an embodiment of the present invention is described, but the present invention is not limited to the embodiment.

That is, the embodiments disclosed at this time are merely illustrative in all respects and are to be considered as not being restrictive ones. The scope of the present invention is shown by the claims rather than the above-mentioned description and all alterations and modifications in the range equal to the claims are intended to be included therewithin.

The present invention can be applied to an energy storage device which has a configuration allowing an insulating layer to be disposed between the positive electrode and the separator, and is capable of attaining the enhancement in high rate cycle endurance at high temperature, and the like.

## Claims

1. An energy storage device (10) comprising: a positive electrode (410), a negative electrode (420), a separator (430) disposed between the positive electrode (410) and the negative electrode (420), a nonaqueous electrolyte, and an insulating layer disposed between the positive electrode (410) and the separator (430),
wherein the positive electrode (410) contains a compound represented by LiₐNi_{b}Co_{c}M_{d}WₓNb_{y}Zr_{z}O₂, provided that a, b, c, d, x, y and z satisfy the equations of 0 ≤ a ≤ 1.2, 0 ≤ b ≤ 1, 0.1 ≤ c ≤ 0.4, 0 ≤ d ≤ 0.5, 0 ≤ x ≤ 0.1, 0 ≤ y ≤ 0.1, 0 ≤ z ≤ 0.1 and b + c + d = 1, and M denotes at least one kind of element selected from the group consisting of Mn, Ti, Cr, Fe, Co, Cu, Zn, Al, Ge, Sn and Mg, as a positive active material and the negative electrode (420) contains hardly graphitizable carbon with a D50 particle diameter greater than or equal to 1.0 µm and less than or equal to 6.0 µm as a negative active material, and
wherein the negative electrode (420) includes a negative substrate layer (421) and a negative composite layer (422) containing the negative active material on the negative substrate layer (421),
**characterized in that** the proportion of a D90 particle diameter of the negative active material to the thickness of the negative composite layer (422) disposed at one side of the negative substrate layer (421) is greater than or equal to 0.07 and less than or equal to 0.7.

2. The energy storage device (10) according to claim 1, wherein the positive electrode (410) includes a positive substrate layer (411) and a positive composite layer (412) containing the positive active material on the positive substrate layer (411), and the insulating layer is bonded to the separator and is not bonded to the positive composite layer (412).

3. The energy storage device (10) according to claim 1, wherein the negative electrode (420) includes a negative substrate layer (421) and a negative composite layer (422) containing the negative active material on the negative substrate layer (421), and the proportion of a D90 particle diameter of the negative active material to the thickness of the negative composite layer (422) disposed at one side of the negative substrate layer (421) is greater than or equal to 0.12 and less than or equal to 0.44.

4. The energy storage device (10) according to any one of claims 1 to 3, wherein the insulating layer is constituted of a resin containing inorganic particles.

## Patentansprüche

1. Energiespeichervorrichtung (10), umfassend: eine positive Elektrode (410), eine negative Elektrode (420), einen Separator (430), der zwischen der positiven Elektrode (410) und der negativen Elektrode (420) angeordnet ist, einen wasserfreien Elektrolyten, und eine isolierende Schicht, die zwischen der positiven Elektrode (410) und dem Separator (430) angeordnet ist,
wobei die positive Elektrode (410) eine Verbindung enthält, die durch LiₐNi_{b}Co_{c}M_{d}WₓNb_{y}Zr_{z}O₂ darstellt wird, unter dem Vorbehalt, dass a, b, c, d, x, y und z die Gleichungen 0 ≤ a ≤ 1,2, 0 ≤ b ≤ 1, 0,1 ≤ c ≤ 0,4, 0 ≤ d ≤ 0,5, 0 ≤ x ≤ 0,1, 0 ≤ y ≤ 0,1, 0 ≤ z ≤ 0,1 und b + c + d = 1 erfüllen, und M mindestens eine Art von Element, das ausgewählt ist aus der Gruppe bestehend aus Mn, Ti, Cr, Fe, Co, Cu, Zn, Al, Ge, Sn und Mg, als ein positives aktives Material bezeichnet, und die negative Elektrode (420) schwer graphitisierbaren Kohlenstoff mit einem D50-Partikel-Durchmesser von mindestens 1,0 µm und maximal 6,0 µm als ein negatives aktives Material enthält, und
wobei die negative Elektrode (420) eine negative Substratschicht (421) und eine negative Verbundschicht (422) enthält, die das negative aktive Material auf der negativen Substratschicht (421) enthält,
**dadurch gekennzeichnet, dass** der Anteil eines D90-PartikelDurchmessers des negativen aktiven Materials an der Dicke der negativen Verbundschicht (422), die auf einer Seite der negativen Substratschicht (421) angeordnet ist, mindestens 0,07 und maximal 0,7 beträgt.

2. Energiespeichervorrichtung (10) nach Anspruch 1, wobei die positive Elektrode (410) eine positive Substratschicht (411) und eine positive Verbundschicht (412) enthält, die das positive aktive Material auf der positiven Substratschicht (411) enthält, und die isolierende Schicht mit dem Separator verbunden ist und nicht mit der positiven Verbundschicht (412) verbunden ist.

3. Energiespeichervorrichtung (10) nach Anspruch 1, wobei die negative Elektrode (420) eine negative Substratschicht (421) und eine negative Verbundschicht (422) enthält, die das negative aktive Material auf der negativen Substratschicht (421) enthält, und der Anteil eines D90-PartikelDurchmessers des negativen aktiven Materials an der Dicke der negativen Verbundschicht (422), die auf einer Seite der negativen Substratschicht (421) angeordnet ist, mindestens 0,12 und maximal 0,44 beträgt.

4. Energiespeichervorrichtung (10) nach einem der Ansprüche 1 bis 3, wobei die isolierende Schicht aus einem Harz besteht, das anorganische Partikel enthält.

## Revendications

1. Dispositif de stockage d'énergie (10) comprenant une électrode positive (410), une électrode négative (420), un séparateur (430) disposé entre l'électrode positive (410) et l'électrode négative (420), un électrolyte non aqueux, et une couche isolante disposée entre l'électrode positive (410) et le séparateur (430),
dans lequel l'électrode positive (410) contient un composé représenté par LiₐNi_{b}Co_{c}M_{d}WₓNb_{y}Zr_{z}O₂, à condition que a, b, c, d, x, y et z satisfassent les équations de 0 ≤ a ≤ 1,2, 0 ≤ b ≤ 1, 0,1 ≤ c ≤ 0,4, 0 ≤ d ≤ 0,5, 0 ≤ x ≤ 0,1, 0 ≤ y ≤ 0,1, 0 ≤ z ≤ 0,1 et b + c + d = 1, et M désigne au moins un type d'élément choisi dans le groupe constitué par Mn, Ti, Cr, Fe, Co, Cu, Zn, Al, Ge, Sn et Mg, en tant que matériau actif positif, et l'électrode négative (420) contient du carbone difficilement graphitisable avec un diamètre de particule D50 supérieur ou égal à 1,0 µm et inférieur ou égal à 6,0 µm en tant que matériau actif négatif, et
dans lequel l'électrode négative (420) comprend une couche de substrat négatif (421) et une couche de composite négatif (422) contenant le matériau actif négatif sur la couche de substrat négatif (421),
**caractérisé en ce que** la proportion d'un diamètre de particule D90 du matériau actif négatif par rapport à l'épaisseur de la couche de composite négatif (422) disposée d'un côté de la couche de substrat négatif (421) est supérieure ou égale à 0,07 et inférieure ou égale à 0,7.

2. Dispositif de stockage d'énergie (10) selon la revendication 1, dans lequel l'électrode positive (410) comprend une couche de substrat positif (411) et une couche de composite positif (412) contenant le matériau actif positif sur la couche de substrat positif (411), et la couche isolante est liée au séparateur et n'est pas liée à la couche de composite positif (412).

3. Dispositif de stockage d'énergie (10) selon la revendication 1, dans lequel l'électrode négative (420) comprend une couche de substrat négatif (421) et une couche de composite négatif (422) contenant le matériau actif négatif sur la couche de substrat négatif (421), et la proportion d'un diamètre de particule D90 du matériau actif négatif par rapport à l'épaisseur de la couche de composite négatif (422) disposée d'un côté de la couche de substrat négatif (421) est supérieure ou égale à 0,12 et inférieure ou égale à 0,44.

4. Dispositif de stockage d'énergie (10) selon l'une quelconque des revendications 1 à 3, dans lequel la couche isolante est constituée d'une résine contenant des particules inorganiques.
